(19) Europäisches Patentamt
European Patent Office
Office européen des brevets

(11) Publication number: 0 152 175 B1

(12) **EUROPEAN PATENT SPECIFICATION**

(45) Date of publication of patent specification: **24.05.89**

(51) Int. Cl.[4]: **C 08 F 36/04**, C 08 F 4/70, C 08 F 2/16

(21) Application number: **85300240.0**

(22) Date of filing: **14.01.85**

(54) **Process for producing a diene polymer.**

(30) Priority: **12.01.84 JP 2575/84**
**27.08.84 JP 176757/84**

(43) Date of publication of application:
**21.08.85 Bulletin 85/34**

(45) Publication of the grant of the patent:
**24.05.89 Bulletin 89/21**

(84) Designated Contracting States:
**BE DE FR GB IT**

(56) References cited:
**EP-A-0 073 597**
**EP-A-0 106 779**
**FR-A-1 251 154**
**FR-A-2 121 003**

(73) Proprietor: **JAPAN SYNTHETIC RUBBER CO., LTD.**
**11-24, Tsukiji-2-chome Chuo-ku**
**Tokyo 104 (JP)**

(72) Inventor: **Ono, Hisao**
**1-15-304, Morigayamacho**
**Yokkaichi-shi (JP)**
Inventor: **Matsumura, Yoshio**
**14-30, Tsukimino-8-chome**
**Yamato-shi (JP)**
Inventor: **Okuya, Eitaro**
**3-43, Obaneen-Shibagakicho Komonocho**
**Mie-gun Mie-ken (JP)**

(74) Representative: **Tubby, David George et al**
**MARKS & CLERK 57-60 Lincoln's Inn Fields**
**London WC2A 3LS (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 152 175 B1

**Description**

This invention relates to a process for producing a diene polymer by stereoregularly polymerizing a conjugated diene in the presence of water.

Numerous studies have been made on the production of stereoregular polymers using transition metals since the Ziegler invention. The production of stereoregular polymers using transition metals is characterized in that the stereoregularity of the microstructure of the polymer formed is very high. Polymers having a regular microstructure cannot be produced by emulsion polymerization or radical polymerization. However, polymerization using transition metals is disadvantageous in that it is very liable to be affected by oxygen and water. As the polymerization of a diene monomer using a transition metal, there is known, for example, polymerization of cis-butadiene using a Ni compound-$BF_3OEt_2$-$AlR_3$ catalyst system. In this polymerization, water hinders the polymerization strongly. Also in polymerization of cis-isoprene using a $TiCl_4$-$AlR_3$ catalyst system, water is a very strong polymerization-inhibitor. It is also known that in production of a 1,2-polybutadiene using a catalyst system consisting of a cobalt compound, an organoaluminum and carbon disulfide, the presence of water reduces the polymerization activity (Japanese Patent Publication Nos. 19,892/72 and 5,436/79). Further, in polymerization using an organic solvent, a 1,2-polybutadiene deposits with the progress of polymerization, the reactor contents become slurry, and sufficient stirring becomes impossible upon further progress of polymerization.

Meanwhile, there are cases where water is used along with a transition metal catalyst component. For example, there are known a cis polymerization of butadiene using a cobalt compound-$AlEt_2Cl$-$H_2O$ catalyst system [Morris Gippin et al., I & E Product Research and Development *1*, (1), 32 (1962)] ad a 1,2-polymerization of butadiene using a cobalt phosphine complex-$AlR_3$-$H_2O$ catalyst system (Japanese Patent Publication No. 32,426/69). It should be noted, however, that the former catalyst system is effective only when water is present in a very small amount (the amount of water is optimum when the molar ratio of water to aluminum is about 0.2) and no polymerization takes place in the presence of a large amount of water. Even in the latter catalyst system, the optimum amount of water is 0.5 to 1.0 in terms of molar ratio of water to aluminum and the use of a small amount of water is effective, but no polymerization is caused in the presence of a large amount of water.

As in the above cases, in stereoregular polymerization using a transition metal catalyst, it has heretofore been considered that water is effective only when it is present in a very small amount, or water is a strong polymerization inhibitor even in a small amount. Therefore, in solution polymerization using a transition metal, a polymerization solvent is purified to remove oxygen and/or water present in the solvent by applying a special measure to the recovery system of the solvent. The water present in the solvent, in particular, cannot be significantly reduced in many cases by a method such as mere distillation or the like; therefore, the solvent is being treated in a column packed with a drying agent such as a molecular sieve, silica gel or the like. Thus, the process is complicated and the production cost is affected to a not negligible extent.

Separately, there are processes for producing a crystalline 1,2-polybutadiene by aqueous suspension polymerization [USP 4,429,085, Japanese Patent Application No. 2,575/74 and Japanese Patent Application Kokai (Laid-Open) No. 78,213/84]. However, polymers obtained by these processes have non-uniform shapes and hence these processes are hardly called suspension polymerization processes, and are rather close to bulk polymerization in water and polymers formed become large lumps, which makes it difficult to control the reaction and product quality, transfer the product and remove the residual catalyst in the product.

As a result of extensive study, the present inventors have succeeded in stereoregular polymerization of a diene monomer using a transition metal in accordance with a suspension polymerization method in the presence of a large amount of water. We have also succeeded in aqueous polymerization of a diene monomer for obtaining a bead polymer having a uniform particle diameter in a good dispersion state.

According to this invention, there is provided a process for polymerizing a conjugated diene, characterized by polymerizing a conjugated diene in an aqueous system in the presence of a catalyst system prepared by adding, to a catalyst obtained preliminarily by contacting (A) a cobalt compound with (B) an organometallic compound or hydride of a metal of Groups I to III of the Periodic Table in the presence of 1 to 100 moles, per mole of (A), of a conjugated diene, (C) at least one member selected from the group consisting of carbon disulfided, phenylisothiocyanic acid and a xanthogen compound and further in the presence of at least one member selected from the group consisting of a surfactant, a dispersant and a polymer solution.

According to this invention, polymerization is conducted in an aqueous system in which water is present in the polymerization system. Accordingly, it is advantageous in that the viscosity of the polymerization system can be reduced and the temperature control of the polymerization system becomes easier. Further, as compared with the ordinary solution polymerization requiring a recovery system because of the use a large amount of a solvent, this invention requires only a small scale recovery system or no recovery system. Furthermore, in this invention, there is no need of difficult and complicated treatments such as previous dehydration of monomers.

In addition, this invention is further advantageous in that polymerization can be conducted in a good dispersion state, a polymer having a uniform particle diameter, for example, a bead polymer, can be

obtained, the control of reaction and product quality is easy, the transfer of product is easy, and the removal of the residual catalyst in the product is also easy.

In this invention, when at least one member selected from a surfactant and a dispersant is present in the polymerization system, the following advantages are obtained as compared with the absence of them:

(1) The control of polymerization conditions (temperature, stirring, etc.) is easier.

(2) In the absence of a dispersant the resulting polymer is in the form of a large lump and adheres to a stirrer, etc., which makes the transfer of the polymer impossible; hence, polymer production on an commercial scale becomes impossible. On the other hand, when a dispersant is used, the polymer formed is in the form of a dispersion of relatively uniform and small particles; so the transfer and handling of the polymer is easy.

(3) Since the resulting polymer particles have fine and uniform diameters, the control of polymer quality is easier. If the polymer particles have large diameters, the quantity control is made impossible by heat generation inside the particles.

(4) Since the polymer particles have fine and uniform diameters, the removal of the residual catalyst in the polymer is easy.

Further, in this invention, when a conjugated diene is polymerized in an aqueous system in the presence of a polymer solution, the following advantages are obtained:

(1) By addition of water to the polymer solution followed by stirring, the whole system becomes heterogeneous (water in polymer solution or polymer solution in water), whereby the viscosity of the polymerization system is greatly reduced and the energy required for stirring is reduced, resulting in an easier stirring.

(2) In the production of a cis-1,4-polybutadiene, an EPDM or the like, water is used for termination of polymerization or removal of catalyst. Even a water-containing polymer solution as obtained above can be used as it is namely without dehydration, in the polymerization of a conjugated diene of this invention.

In this invention, the polymerization of a diene monomer has become possible even in the presence of a large amount of water by the preliminary preparation of the catalyst under specific conditions.

The cobalt compound (A) used in the process of this invention includes, for example, cobalt salts of organic acids such as cobalt octylate, cobalt naphthenate, cobalt benzoate, cobalt nitrate, cobalt malonate and cobalt acetate; cobalt complexes such as cobalt bisacetylacetonate, cobalt trisacetylacetonate and cobalt ethylacetoacetate; triarylphosphine complexes of cobalt halides such as triphenylphosphine complex of cobalt bromide, tri - m - tolylphosphine complex of cobalt bromide and tri - m - xylylphosphine complex of cobalt bromide; pyridine- or pyridine derivative-complexes of cobalt halides such as pyridine complex of cobalt chloride and β-picoline complex of cobalt chloride; ethyl alcohol complex of cobalt chloride; and monovalent or non-valent cobalt complexes such as (1,3 - butadiene)[1 - (2 - methyl - 3 - butenyl) - π - allyl]cobalt, tris - π - allylcobalt, bicyclo[3,3,0] - octadienyl - 1,5 - cyclo - octadienecobalt, bis - (π - allyl) - halogenocobalt (the halogen is iodine, bromine or chlorine) and octacarbonyldicobalt. These cobalt compounds may be used alone or in admixture of two or more.

As the organometallic compound or hydride of a metal of Groups I to III of the Periodic Table (B), compounds capable of reducing the cobalt compound (A) are preferably used. As the metals of Groups I to III of the Periodic Table, there may be used metals of Groups Ia, Ib, IIa, IIb, IIIa and IIIb. Of these, metals of Groups Ia, IIa and IIIa are preferred. Preferable metals are specifically Li, Na, K, Mg, Zn and Al and particularly preferable metals are Li and Al. Preferable organometallic compounds or metal hydrides (B) are alkyl derivatives of the above-mentioned metals, the alkyl group having 1 to 6 carbon atoms, or hydrides of the metals. Specific examples of these organometallic compounds or metal hydrides include organolithium compounds such as ethyllithium, n - butyllithium, sec - butyllithium and t - butyllithium; organozinc compounds such as diethylzinc and dimethylzinc; organomagnesium compounds such as butylmagnesium chloride, ethylmagnesium bromide, dibutylmagnesium and dihexylmagnesium; organoaluminum compounds such as trimethylaluminum, triethylaluminum, triisobutylaluminum, tri - n - hexylaluminum, tridecylaluminum, diethylaluminum chloride, diisobutylaluminum chloride, ethylaluminum sesquichloride, ethylaluminum dichloride and tetraethylaluminoxane; and metal hydrides such as lithium aluminum hydride, sodium boron hydride and lithium boron hydride. These organometallic compounds or metal hydrides can be used alone or in combination of two or more.

Carbon disulfide and/or phenylisothiocyanic acid, both of which are used as the (C) component in this invention, are preferably preliminarily freed of oxygen dissolved therein by nitrogen bubbling or the like though this is not critical.

The xanthogen compound which is also used as the (C) component in this invention is a compound containing a group represented by the general formula

$$R-O-\overset{\overset{S}{\|}}{C}-S-$$

(where R is hydrogen or various organic groups), and preferable examples thereof are xanthogenic acids such as methylxanthogenic acid, ethylxanthogenic acid, n-propylxanthogenic acid, isolpropylxanthogenic acid, n-butylxanthogenic acid, sec - butylxanthogenic acid, t - butylxanthogenic acid, n - pentylxantho-

genic acid, n - hexylxanthogenic acid, n - heptylxanthogenic acid, n - octylxanthogenic acid, 2 - ethylhexylxanthogenic acid, phenylxanthogenic acid and p - tolylxanthogenic acid; lithium, sodium and potassium salts of these xanthogenic acids; and xanthogen disulfides such as dimethylxanthogen disulfide, diethylxanthogen disulfide, di - n - propylxanthogen dislufide, diisopropylxanthogen disulfide, di - n - butylxanthogen disulfide, di - t - butylxanthogen disulfide, 2 - ethylhexylxanthogen disulfide, diphenylxanthogen disulfide and ethylphenylxanthogen disulfide. Of the above xanthogen compounds, the xanthogen disulfides are more preferable, and dimethylxanthogen disulfide, diisopropylxanthogen disulfide and diphenylxanthogen disulfide are most preferable.

As the surfactant and the dispersant added in the step of polymerization in this invention, there may be used, for example, surfactants, protective colloid substances, metal chlorides or phosphates. Of these, surfactants and protective colloids are preferred.

As the surfactants, there may be used anionic, cationic and nonionic surfactants alone or in combination of two or more.

The anionic surfactants include fatty acid salts, salts of alkyl sulfates, alkylbenzenesulfonates, alkylnaphthalenesulfonates, dialkylsulfosuccinates, alkyldiallylethersulfonates, alkyl phosphates, naphthalenesulfonic acid-formalin condensates, polyoxyethylene alkyl ethers and alkylallylethersulfates, and salts of copolymers of an olefin (e.g. diisobutylene) and maleic anhydride.

The cationic surfactants include alkylamine salts, quaternary ammonium salts.

The nonionic surfactants include polyoxyethylene alkyl ethers, polyoxyethylene alkylphenyl ethers, polyoxyethylene alkylphenol ethers, polyoxyethylene alkyl ethers, sorbitan fatty acid esters, polyoxyethylene sorbitan fatty acid esters, polyethylene glycol fatty acid esters, oxyethylene-oxypropylene block polymers, fatty acid monoglycerides, and polyoxyethylene alkylamines.

Particularly preferable surfactants are alkylbenzenesulfonates, alkyl sulfates, or a combination of a salt of an olefin-maleic anhydride copolymer and calcium chloride.

The protective colloids include (partially saponified) polyvinyl alcohol, metal salts of polyacrylic acid, gelatin, albumin, starch, polyvinyl methyl ethers, methyl cellulose and polyvinyl pyrrolidones. Of these partially saponified polyvinyl alcohols are preferred.

The metal chlorides include calcium chloride, zinc chloride, aluminum chloride, barium chloride, potassium chloride and sodium chloride. Of these, potassium chloride is particularly preferred.

The phosphates include tricalcium phosphate, trimagnesium phosphate and tribarium phosphate.

The amount of the surfactant or the dispersant used may vary depending upon the desired particle size of the polymer formed and the concentration of the monomer used. When the amount is 30 to 0.0001 g, preferably 10 to 0.001 g, per 100 g of the monomer, a suspension polymer having a desired particle size can be obtained. It is desirable that the surfactant and the dispersant be preliminarily added to water which is used in the polymerization.

In this invention, a conjugated diene can also be polymerized in the presence of a solution of a polymer (such as a rubber or a resin), whereby a specific polymer composition consisting of the polymer and a crystalline polydiene is produced in a low viscosity and uniformly.

The polymer of the polymer solution which may co-exist in the polymerization system includes rubbery polymers such as natural rubber, a cis - 1,4 - polybutadiene, a polyisoprene, a 1,2 - polybutadiene, a low cis - polybutadiene, a butadiene-styrene copolymer, a butadiene - isoprene copolymer, an isoprene - styrene copolymer, a styrene - butadiene - styrene block copolymer, a styrene - isoprene - styrene block copolymer, an ethylene - propylene copolymer, an ethylene - propylene - diene copolymer, butyl rubber, a styrene - butadiene copolymer obtained by emulsion polymerization, an acrylonitrile-butadiene copolymer obtained by emulsion polymerization or an acrylic (co)polymer. Of these, the polyisoprene, the cis - 1,4 - polybutadiene, the 1,2 - polybutadiene, the low cis - polybutadiene, the butadiene - styrene copolymer and the ethylene - propylene copolymer are particularly preferable.

The polymer of the above polymer solution also includes resins such as a polystyrene, an acrylonitrile-styrene copolymer, an ethylene - vinyl acetate cpolymer, an acrylonitrile - butadiene - styrene copolymer, a polyvinyl chloride, a phenolic resin, a polyester, a polyethylene, a polypropylene, a polyvinyl acetate, a polymethacrylate, a polyvinylidene chloride, a polyvinyl ether, a polyvinyl ketone, a polyamide, a trans - 1,4 - polybutadiene or a trans - 1,4 - polyisoprene. Of these, the polystyrene and the ethylene - vinyl acetate copolymer are particularly preferable.

The organic solvent for dissolving the above polymer therein includes aromatic hydrocarbon solvents such as benzene, toluene or xylene; aliphatic hydrocarbon solvents such as pentane, hexane, heptane or octane; halogenated hydrocarbon solvents such as methylene chloride, ethylene dichloride, trichloroethane or chlorobenzene; ester type solvents such as ethyl acetate, propyl acetate, butyl acetate or ethyl octylate; alcohol type solvents such as methanol, ethanol, isopropanol, n - butanol, sec - butanol, octanol or ethylene glycol; ketone type solvents such as acetone, methyl ethyl ketone or acetophenone; nitrile type solvents such as acetonitrile, adiponitrile or benzonitrile; and amide type solvents such as ε-caprolactam, propiolactam, butyrolactam, γ-valerolactam, N - methylpyrrolidone, N - ethylpyrrolidone, N - methylformamide, N - ethylformamide, or N,N - dimethylformamide.

The polymer concentration of the polymer solution is preferably about 50 to 0.1% by weight, more preferably 20 to 1% by weight. The amount of the solvent in the conjugated diene-polymerization system is preferably 0 to 1,000% by weight, more preferably 0 to 300% by weight, based on the amount of a

monomer. However, this invention can be achieved by dissolving the above polymer in monomeric butadiene to be polymerized in the present process without using the above solvent.

In the polymerization of a conjugated diene according to the present process in the presence of a polymer solution, if the proportion of the polymer solution in the polymerization system is large, the amount of the resulting diene polymer is small and the viscosity of the polymer solution is low, the surfactant and/or the dispersant may not necessarily be added.

However, in all the other cases, at least one member selected from the surfactants and dispersants is added to the polymerization system, whereby the polymerization system can be stabilized and the particles of the diene polymer formed can be made small and uniform.

In the process of this invention, the method of preparing the catalyst system used is very important. The method of the preparation of the catalyst system used in this invention comprises contacting and reacting (A) a specific amount of the cobalt compound with (B) a specific amount of the organometallic compound or hydride of a metal of Groups I to III of the Periodic Table in the presence of a conjugated diene. In this preparation method, the molar ratio of the conjugated diene to the cobalt compound (A) is preferably 1 to 100, more preferably 6 to 50, and the molar ratio of the component (B) to the component (A) is preferably 0.3 to 100, more preferably 0.9 to 50. The temperature used in said preparation is preferably −78° to 100°C, more preferably −30° to 50°C, most preferably −10° to 40°C. The pressure used is preferably such that the conjugated diene in the preparation of the catalyst does not vaporize and is ordinarily 0.01 to 20 kg/cm$^2$ gauge. The reaction between the (A) component and the (B) component can be uniformly effected by, if necessary, stirring the solvent and the catalyst components in the preparation of the catalyst. As the solvent for the catalyst preparation, there can preferably be used aliphatic hydrocarbons of 5 to 12 carbon atoms and aromatic hydrocarbons. Specific examples of the preferable solvents include toluene, benzene, xylene, hexane, heptane, pentane and refined kerosene. The amount of the solvent used is preferably 1 to 0.001 mole, more preferably 0.5 to 0.001 mole, per liter of the reacted cobalt solution containing the (A) and (B) components. A conjugated diene may be used in place of the solvent. It is sufficient that the stirring is effected to such an extent that the contents of the reactor are uniformly mixed. The reaction time for preparing the catalyst varies depending upon the temperature for preparing the catalyst, etc.; however, is usually about 5 min to 2 hr.

The (C) component may preliminarily be added to a monomer, a solvent solution of the monomer or an aqueous suspension of the monomer, or may be added to the polymerization system after the addition of the reaction mixture of the cobalt compound (A) and component (B) to the system. The amount of the (C) component used is preferably 0.01 to 100 moles, more preferably 0.3 to 10 moles, per mole of the cobalt compound (A).

The water used in the polymerization of this invention is preferably freed of the dissolved oxygen preliminarily by nitrogen bubbling or the like. The water is used in an amount necessary for the water and the diene monomer or a solvent solution of the diene monomer to form a suspension. The amount of water is preferably 0.2 part by volume or more, more preferably 1 part by volume or more, per part by volume of the diene monomer or the solvent solution thereof. There is no upper limit of the amount of water; however, the amount is preferably 50 parts by volume or less, more preferably 20 parts by volume or less. If the amount of water is too large the polymerization efficiency per unit reaction volume is reduced.

As the conjugated diene used in this invention, conjugated dienes having 4 to 5 carbon atoms, such as butadiene or isoprene, are preferred. Together with the conjugated diene, a small amount of other monomers such as olefins may be present in the polymerization system.

In this invention, a conjugated diene monomer is suspension-polymerized in an aqueous system; however, a small amount of an organic solvent for dissolving the conjugated diene therein may also optionally be added to the aqueous system. The organic solvent includes aromatic hydrocarbon solvents such as benzene, toluene and xylene; aliphatic hydrocarbon solvents such as pentane, hexane, heptane and octane; halogenated hydrocarbon solvents such as methylene chloride, ethylene dichloride, trichloroethane and chlorobenzene ester type solvents such as ethyl acetate, propyl acetate, butyl acetate and ethyl octylate; alcohol type solvents such as methanol, ethanol, isopropanol, n - butanol, sec - butanol, octanol and ethylene glycol; ketone type solvents such as acetone, methyl ethyl ketone and acetophenone; nitrile type solvents such as acetonitrile, adiponitrile and benzonitrile; and amide type solvents such as ε - caprolactam, propiolactam, butyrolactam, γ - valerolactam, N - methylpyrrolidone, N - ethylpyrrolidone, N - methylformamide, N - ethylformamide and N,N - dimethylformamide. Of these, the ester type solvents are particularly preferable.

The amount of the solvent is preferably 0 to 1,000% by weight, more preferably 0 to 300% by weight, based on the monomer.

The melting point (Tm) of the polymer formed can be controlled between about 80°C and about 200°C by changing the type and amount of the organic solvent used for dissolving the monomer.

The larger the amount of organic solvent, the lower is the Tm. When the organic solvent is a hydrocarbon, such as toluene or hexane, the change in Tm is small, but when the solvent is a polar solvent, such as an ester, an alcohol, a ketone, a nitrile, an amide or a sulfoxide, the decrease in Tm is great.

In the process of the present invention, the polymerisation temperature is preferably from 0° to 80°C, more preferably from 5° to 50°C.

The various components of the catalyst and monomers may be added to the reaction medium in various orders. In one embodiment of the invention, the polymerisation system is prepared by mixing a solution of a polymer in an organic solvent, water and a conjugated diene with a catalyst obtained by first contacting the component (A) with the component (B) in the presence of a conjugated diene, and then adding the component (C) thereto. In another embodiment, at least one surfactant and/or dispersant is added to the polymerization system after the components (A) and (B) have been added to the polymerisation system. In a further embodiment, the polymerisation system is prepared by mixing the component (C) with a solution of a polymer in an organic solvent, water and a conjugated diene monomer and then adding thereto a catalyst obtained by first contacting component (A) with component (B) in the presence of a conjugated diene.

The polymerization method when this invention is practised in the presence of a polymer solution comprises, for example, adding water and butadiene to a solution of a polymer as mentioned above in a solvent, then adding the catalyst components (A) and (B) prepared according to the above-mentioned methods, adding, after stirring, an emulsifier and carbon disulfide (or phenylisothiocyanic acid or a xanthogen compound); and subjecting the resulting mixture to polymerization with stirring. Of course, this method is not critical.

In the above polymerization, the polymerization temperature is 0° to 80°C, preferably 5° to 50°C.

In this invention, to the aqueous polymerization system of a conjugated diene may be added various additives such as an antioxidant, an ultraviolet absorber, a flame retardant, a foaming agent, a lubricant, a processing adjuvant, a filler, a reinforcing agent, a dye, a pigment or a polymerization initiator (e.g. a radical generating agent). The timing of addition of these additives can be before, during or after the polymerization. There is no particular restriction to the additives and they may be water-insoluble or water-soluble. Water-insoluble additives may be added in an appropriate form such as lumps, granules, powder or the like.

Of these additives, the antioxidant is particularly useful from a practical standpoint. As the antioxidant, there may preferably be used those which are ordinarily employed in rubbers and resins, such as 2,6 - di - tert - butyl - p - cresol, 2,2' - dihydroxy - 3,3' - di(α - methylcyclohexyl) - 5,5' - dimethyldiphenylmethane, dilauryl 3,3' - thiodipropionate and 3,5 - di - tert - 4 - hydroxybenzyl alcohol.

The foaming agent includes dinitrosopentamethylenetetramine, azodicarbonamide or p,p' - oxybisbenzenesulfonylhydrazine.

The processing adjuvant includes: metal soaps such as zinc oleate or tin stearate; and stearic acid.

The polymerization initiator includes radical generating agents, the representatives of which are azo compounds such as azobisisobutyronitrile.

By adding additives to the polymerization system of this invention, a polymer can be obtained in which the additives are uniformly dispersed. When the additives are directly added to a polymer according to an ordinary method, for example, a method of mixing the additives with a polymer in the molten state by means of a hot roll or an extrusion-mixer. Particularly when the polymer is a 1,2 - polybutadiene having a high melting point, the melting temperature becomes high, and the polymer gels during mixing with the additives and is in some cases denatured. There is also a method of immersing a solid polymer in a solvent in which the antioxidant is dissolved, but according to this method, the antioxidant exists only on the surfaces of the polymer particles and it is difficult to obtain a polymer in which the antioxidant is uniformly dispersed.

The polymer produced according to the process of this invention can suitably be used alone or in admixture with other rubbers, and synthetic resins, and is suitable for the production of tires, footwears, films, sponges, rubber vibration insulators and bottles and also for the modification of other rubbers and resins.

The polymer composition produced by carrying out the process of this invention in the presence of a polymer solution can be used as a reinforcing rubber, a rubber of good extrudability, an impact resistant resin, a heat-resistant processing resin and a reinforcing resin.

This invention will be explained more specifically referring to Examples, but is not restricted to the Examples.

Example 1

Preparation of catalyst

In a 100-ml pressure bottle preliminarily purged with nitrogen were placed a polytetrafluoroethylene (PTFE)—coated stirrer and 9.6 ml of a 0.25 mole/liter solution of cobalt octylate in toluene. The bottle was stoppered. Into the bottle was then charged 6 ml of butadiene. The bottle was placed in a water bath at 30°C and, while rotating the stirrer vigorously, to the bottle was fed 18 ml of 0.4 mole/liter solution of triisobutylaluminum in toluene. The resulting mixture was subjected to reaction for about 15 min. The resulting reaction mixture was used in the subsequent polymerization as a reacted cobalt solution.

Polymerization

In an 800-ml autoclave preliminarily purged with nitrogen were placed 200 ml of a distilled water preliminarily subjected to nitrogen bubbling treatment, 0.2 g of a sodium salt of a maleic anhydride-diisobutylene copolymer (trade name: DEMOL EP, manufactured by Kao Corp.) and 0.1 g of calcium

chloride. The mixture was cooled to 5°C. To this mixture were added 50 g of butadiene and 3.4 ml of the above prepared reacted cobalt solution (this amount corresponds to 0.24 mM in cobalt). The whole mixture was subjected to stirring for about 10 min at 500 rpm. Upon adding 0.24 mM of carbon disulfide thereto, polymerization was initiated. The polymerization was effected for 1 hr at 15°C. The resulting polymer was taken on a cloth, immersed in a 1% methanolic solution of BHT, and then dried at 50°C overnight in a vacuum drier, thereby obtaining 16 g of a bead polymer having an average particle diameter of 0.8 mm. The polymer had a Tm of 195°C and a vinyl configuration content of 98%.

Comparative Example 1

Polymerization was effected using the same catalyst as in Example 1, except that neither surfactant nor calcium chloride were used. The polymer formed adhered to the stirrer and the inner wall of the autoclave. The autoclave was disassembled and the polymer formed was collected and subjected to the same treatment as in Example 1. The polymer obtained was gypsum-like and partially contained beads of 1 to 5 mm in diameter. Therefore, it was presumed that commercial production of this polymer would be almost impossible without using a dispersant. The yield of the polymer was 17 g, the Tm was 192°C and the vinyl configuration content was 98%.

Example 2

In this Example, the reacted cobalt solution obtained in Example 1 was used, and methyl acetate was used as a melting point-controlling agent for a polymer formed.

Polymerization

In an 800-ml autoclave preliminarily purged with nitrogen were placed 200 ml of a distilled water preliminarily subjected to nitrogen bubbling treatment, 0.2 g of a sodium salt of a maleic anhydride-diisobutylene copolymer and 0.1 g of calcium chloride. Thereto was further added 50 ml of methyl acetate. The resulting mixture was cooled to 5°C. Thereto were added 50 g of butadiene and 3.4 ml of the reacted cobalt solution obtained in Example 1 (this amount corresponds to 0.24 mM of cobalt). The whole mixture was subjected to stirring for about 10 min at 500 rpm. Upon adding 0.24 mM of carbon disulfide, polymerization was initiated. The polymerization was effected at 15°C for 2 hr. The polymer formed was taken on a cloth and then subjected to the same treatment as in Example 1, thereby obtaining 44.5 g of a bead polymer having an average particle diameter of 0.65 mm. The polymer had a Tm of 120°C, a vinyl configuration content of 83% and a weight average molecular weight by GPC of 186,000.

Example 3

Preparation of catalyst

In a 100-ml pressure bottle preliminarily purged with nitrogen was placed a Teflon-coated stirrer, and 20 ml of 0.05 mole/liter solution of cobalt naphthenate in toluene was charged thereinto. The bottle was stoppered. To the solution was added 2 ml of butadiene and the bottle was placed in an iced water bath at 0°C. With rotating the stirrer vigorously, 4 ml of 0.5 mole/liter solution of n-butyllithium in toluene was added to the mixture. The resulting mixture was subjected to reaction for about 5 min. The reaction mixture was used in the subsequent polymerization.

Polymerization

Polymerization was effected in the same manner as in Example 2. The polymer had a yield of 46 g, a Tm of 122°C, a vinyl configuration content of 84% and a weight average molecular weight by GPC of 202,000. The polymer formed was a bead polymer having an average particle diameter of 0.58 mm.

Example 4

Polymerization was effected under the same polymerization conditions as in Example 1 while applying a mechanical shear force.

A polymerization vessel equipped with a pipeline homomixer was used.

In an 800-ml autoclave preliminarily purged with nitrogen were placed 400 ml of a distilled water preliminarily subjected to nitrogen bubbling treatment, 0.4 g of a sodium salt of a maleic anhydride-diisobutylene copolymer and 0.2 g of calcium chloride. Further, 100 ml of methyl acetate was added to the resulting mixture. The mixture was cooled to 5°C. Thereto were added 100 g of butadiene and 6.8 ml of the reacted cobalt solution obtained in Example 1 (this amount corresponds to 0.48 mM of cobalt). The whole mixture was stirred for about 10 min at 500 rpm, and at the same time, a pump (a flow rate of 150 ml/min) and a pipeline homomixer (7,000 rpm) were allowed to operate. The operation of the pump and the pipeline homomixer was terminated and, with stirring the autoclave contents at 500 rpm, 0.48 mM of carbon disulfide was added thereto to initiate polymerization. The polymerization was effected at 15°C for 2 hr. The polymer formed was subjected to the same post-treatment as in Example 1. Microscopic observation of the polymer obtained revealed that it consisted of fine particles of 10 to 20 μm in particle diameter. The polymer had a Tm of 121°C, a vinyl configuration content of 81% and a weight average molecular weight by GPC of 235,000.

Examples 5 to 9

Table 1 shows the results of Examples 5 to 9 in which the same procedure as in Example 2 was repeated, except that the sodium salt of a maleic anhydride-diisobutylene copolymer and calcium chloride used in Example 2 were replaced by a polyvinyl alcohol (GOHSENOL GH-23, manufactured by Nippon Synthetic Chemical Industry Co., Ltd.), a polyoxyethylene nonyl phenyl ether (EMULGEN 950, manufactured by Kao Corp.), sodium laurylsulfate (EMAL 0, manufactured by Kao Corp.), polysodium acrylate (ARON T-40, manufactured by TOAGOSEI Chemical Industry Co., Ltd.) or tertiary calcium phosphate.

It is appreciated from these Examples that use of at least one of the specific surfactant, protective colloid and phosphate enables the production of a polymer in a suspension state in which the polymer particles are dispersed very uniformly.

TABLE 1

| | Dispersant | | Polymer yield (g) | Average particle diameter of polymer (mm) | Tm of polymer (°C) | Vinyl configuration content in polymer (%) | Molecular weight of polymer ($\times 10^4$) |
|---|---|---|---|---|---|---|---|
| | Kind | Amount (g) | | | | | |
| Example 5 | Polyvinyl alcohol | 0.2 | 40.5 | 0.04 | 118 | 80 | 17.5 |
| Example 6 | Polyoxyethylene nonyl phenyl ether | 0.2 | 35.0 | 0.02 | 120 | 81 | 24.5 |
| Example 7 | Sodium laurylsulfate | 0.2 | 42.1 | 1.5 | 123 | 82 | 15.1 |
| Example 8 | Polysodium acrylate | 0.2 | 40.3 | 1.2 | 120 | 81 | 18.5 |
| Example 9 | Tricalcium phosphate | 0.2 | 39.5 | 1.1 | 121 | 82 | 19.3 |

Example 10

Preparation of catalyst

In a 300-ml pressure bottle preliminarily purged with nitrogen was placed a Teflon-coated stirrer, and 10 ml of a 0.20 mole/liter solution of cobalt octylate in cyclohexane was charged into the bottle. The bottle was stoppered. To the solution in the bottle was added 3.5 ml of butadiene. The bottle was placed in an iced water bath at 0°C. While rotating the stirrer vigorously, 60 ml of a 0.1 mole/liter solution of sodium boron hydride in isopropanol was added to the mixture in the pressure bottle. The mixture was subjected to reaction for about 15 min. The reaction mixture obtained was used in the subsequent polymerization as a reacted cobalt solution.

Polymerization

In a 350-ml pressure bottle was placed 200 ml of a distilled water, and nitrogen bubbling was conducted for 5 min. To the distilled water were added, as a dispersant, 0.15 g of a sodium salt of a maleic anhydride-diisobutylene copolymer (trade name: DEMOL EP, manufactured by Kao Corp.) and 0.07 g of calcium chloride. Further, 17.7 g of butadiene was added and the pressure bottle was stoppered. To the resulting mixture were added 0.20 mM of carbon disulfide and 7.4 ml of the above reacted cobalt soluton (this amount corresponds to 0.20 mM of cobalt). The pressure bottle was vigorously shaken and then placed in a rotary polymerization tank at 20°C to effect polymerization for 1 hr. After the polymerization, a crumb slurry polymer was collected by filtration by the use of a Tetoron cloth. The polymer was immersed in a methanolic solution of BHt as an antioxidant and then vacuum-dried at 50°C. The polymer obtained had a yield of 92%, a 1,2 content of 96% and a Tm by DSC (abbreviation of differential scanning calorimeter) of 172°C.

The Tm was determined by the use of a DSC model 900 of Du Pont. The temperature-elevating speed was 20°C/min, 10 mg of a sample was used and alumina was used as a reference.

The microstructure of the polymer was calculated from the infrared absorption spectrum in accordance with the Morero method.

Example 11

Polymerization was effected using the same catalyst as in Example 10 and also using an ε-caprolactone solution of a monomer.

Polymerization

In a 350-ml pressure bottle was placed 200 ml of distilled water, and nitrogen bubbling was conducted for 5 min. Then, the same dispersant as in Example 10 was added to the distilled water. Into the pressure bottle were further charged 1 ml of ε-caprolactone and 17.7 g of butadiene. The pressure bottle was stoppered. To the mixture in the bottle were added 0.20 mM of carbon disulfide and 7.4 ml of the reacted cobalt solution obtained in Example 10. Polymerization and post-treatments were effected in the same manner as in Example 10. The polymer obtained had a yield of 93%, a 1,2 content of 96% and a Tm by DSC of 169°C.

Example 12

The same procedure as in Example 11 was repeated, except that the ε-caprolactone was replaced by methyl acetate. The results are shown in Table 2.

Example 13

The same procedure as in Example 11 was repeated, except that the ε-caprolactone was replaced by dimethyl fumarate. The results are shown in Table 2.

TABLE 2

| | Solvent | | Yield of polymer (%) | Analysis of polymer | |
|---|---|---|---|---|---|
| | Kind | Amount (ml) | | Tm (°C) | 1,2 content (%) |
| Example 10 | None | — | 92 | 172 | 96 |
| Example 11 | ε-Caprolactone | 1 | 93 | 169 | 96 |
| Example 12 | Methyl acetate | 30 | 91 | 114 | 81 |
| Example 13 | Dimethyl fumarate | 1 | 30 | 170 | 96 |

Example 14

Polymerization and post-treatments were conducted in the same manner as in Example 10, except that the 17.7 g of butadiene used in Example 10 was replaced by 15.9 g of butadiene and 2.2 g of isoprene. The polymer obtained had a yield of 53%, a Tm of 159°C and a 1,2 content of 96%. The polymer was formed into a film and infrared absorption analysis was applied to the film. It gave the absorption of 3,4-polyisoprene at 890 cm. It is appreciated from the low Tm that the polymer is a butadiene-isoprene copolymer.

Comparative Example 2

In a 350-ml pressure bottle was placed 200 ml of distilled water, and nitrogen bubbling was conducted for 5 min. The same dispersant as in Example 1 was added to the distilled water. Then, a monomer and three catalyst components (the catalyst components were not subjected to preliminary treatment) were added to the above mixture in various addition orders as shown in Table 3. In all the cases, no polymer was formed.

TABLE 3

| | Addition order of monomer and catalyst components |
|---|---|
| 1 | BD→B→Co→$CS_2$ |
| 2 | BD→B→$CS_2$→Co |
| 3 | BD→Co→B→$CS_2$ |
| 4 | BD→Co→$CS_2$→B |
| 5 | BD→$CS_2$→B→Co |
| 6 | BD→$CS_2$→Co→B |

Note BD: Butadiene (17.7 g)
B: Sodium boron hydride (0.72 mM)
Co: Cobalt octylate (0.24 mM)
$CS_2$: (0.24 mM)

After each addition, the pressure bottle was vigorously shaken and was allowed to stand for about 1 min.

Example 15

In order to ascertain the effect of this invention, suspension polymerization was effected using an 850-ml autoclave. In the 850-ml autoclave was placed 300 ml of distilled water, and nitrogen purging was conducted for 10 min. As in Example 1, to the distilled water were added 0.2 g of a sodium salt of a maleic anhydride-diisobutylene copolymer and 0.1 g of calcium chloride. The resulting mixture was cooled to 5°C and 15 ml of ε-caprolactone was added to the mixture. Thereto were further added 26.6 g of butadiene and 0.30 mM of carbon disulfide, and the resulting mixture was vigorously stirred. To this mixture was added 11.0 ml of the catalyst (reacted cobalt solution) prepared in Example 10 (11.0 ml corresponds to 0.30 mM of cobalt). Polymerization was effected for 20 min while maintaining the temperature of the system at 15°C. Post-treatments were conducted in the same manner as in Example 10. The results are shown in Table 4.

Example 16

The same procedure as in Example 15 was repeated, except that the ε-caprolactone was replaced by methyl acetate. The results are shown in Table 4.

Examples 17 and 18

The same procedure as in Example 16 was repeated, except that the amounts of methyl acetate and the catalyst (reacted cobalt solution) were changed.

Example 19

The same procedure as in Example 18 was repeated, except that the methyl acetate was replaced by methanol. The results are shown in Table 4.

Example 20

The same procedure as in Example 16 was repeated, except that the amount of methyl acetate was changed to 30 ml and the nitrogen purging of the autoclave was not conducted. A polymer was obtained at a yield of 35%. This Example shows that the catalyst of this invention is resistant to not only water but also air.

Example 21

In an 850-ml autoclave was placed 300 ml of distilled water, and nitrogen purging was conducted for 10 min. Thereto were added 0.2 g of a sodium salt of a maleic anhydride-diisobutylene copolymer and 0.1 g of calcium chloride. The resulting mixture was cooled to 5°C, and thereto were added 23.9 g of butadiene, 3.3 g of isoprene and 0.21 mM of carbon disulfide. The resulting mixture was vigorously stirred and thereto was added 11.0 ml of the catalyst (reacted cobalt solution) prepared in Example 1 (11.0 ml corresponds to 0.30 mM of cobalt). Polymerization was effected for 20 min while maintaining the polymerization system at 15°C. Post-treatments were conducted in the same manner as in Example 10. The results are shown in Table 4.

TABLE 4

| | Polymerization recipe | | | | | | Yield (%) (Polymerization: 1 hr) | Properties of polymer | | |
|---|---|---|---|---|---|---|---|---|---|---|
| | Butadiene (g) | Water (ml) | $CS_2$ (mM) | Organic solvent Kind | Organic solvent Amount (ml) | Amount of cobalt (mM) | | Tm (°C) | 1,2 content | $[\eta]^{30°C}_{toluene}$ |
| Example 15 | 26.6 | 300 | 0.30 | ε-Caprolactone | 15 | 0.30 | 93 | 121 | 83 | 1.21 |
| Example 16 | 26.6 | 300 | 0.30 | Methyl acetate | 15 | 0.30 | 92 | 129 | 85 | 1.21 |
| Example 17 | 26.6 | 300 | 0.12 | Methyl acetate | 15 | 0.09 | 75 | 114 | 81 | 1.01 |
| Example 18 | 17.7 | 200 | 0.30 | Methyl acetate | 100 | 0.30 | 80 | 99 | 80 | 1.32 |
| Example 19 | 17.7 | 200 | 0.30 | Methanol | 100 | 0.30 | 83 | 162 | 95 | — |
| Example 20 | 26.6 | 300 | 0.30 | Methyl acetate | 30 | 0.30 | 35 | 114 | 81 | 1.27 |
| Example 21 | Butadiene 23.9 Isoprene 3.3 | 300 | 0.30 | None | — | 0.30 | 55 | 158 | 93 | — |

Example 22

Preparation of catalyst

In a 100-ml pressure bottle preliminarily purged with nitrogen was placed a PTFE-coated stirrer, and 10 ml of a 0.20 mole/liter solution of cobalt octylate in cyclohexane was charged thereinto. The pressure bottle was stoppered. To the solution in the bottle was added 4 ml of butadiene, and the pressure bottle was placed in an iced water bath at 0°C. While rotating the stirrer vigorously, 16 ml of a 0.5 mole/liter solution of butylmagnesium chloride in dibutyl ether was fed to the pressure bottle. The resulting mixture was subjected to reaction for about 30 min. The reaction mixture obtained (reacted cobalt solution) was used in the subsequent polymerization.

Polymerization

In a 350-ml pressure bottle was placed 200 ml of distilled water, and nitrogen bubbling was conducted for 5 min. To the distilled water were added 0.15 g of a sodium salt of maleic anhydride-diisobutylene copolymer and 0.07 g of calcium chloride. To the resulting mixture was added 17.7 g of butadiene and the pressure bottle was stoppered. Into the bottle were charged 0.20 mM of carbon disulfide and 3.0 ml of the above reacted cobalt solution (3.0 ml corresponds to 0.20 mM of cobalt). The pressure bottle was vigorously shaken and then placed in a rotary polymerization tank at 20°C in which polymerization was effected for 1 hr. The polymer formed was subjected to post-treatments in the same manner as in Example 10. The polymer obtained had a yield of 85%, a 1,2 content of 98% and a Tm by DSC of 187°C.

Example 23

Preparation of catalyst

In a 100-ml pressure bottle preliminarily purged with nitrogen was placed a Teflon coated stirrer and 20 ml of a 0.05 mole/liter solution of cobalt naphthenate in toluene was charged into the bottle. The pressure bottle was then stoppered. To the solution in the pressure bottle was added 2 ml of butadiene, and the pressure bottle was then placed in an iced water bath at 0°C. While rotating the stirrer vigorously, 4 ml of a 0.5 mole/liter solution of n-butyllithium in n-hexane was fed to the pressure bottle. The resulting mixture was subjected to reaction for about 5 min. The reaction mixture obtained (reacted cobalt solution) was used in the subsequent polymerization.

Polymerization

In a 350-ml pressure bottle was placed 200 ml of distilled water, and nitrogen bubbling was conducted for 5 min. To the distilled water were added 0.15 g of a sodium salt of a maleic anhydride-diisobutylene copolymer and 0.07 g of calcium chloride. To the resulting mixture were added 1 ml of ε-caprolactone and 17.7 g of butadiene. The pressure bottle was then stoppered. To the pressure bottle were fed 0.24 mM of carbon disulfide and 6.2 ml of the above reacted cobalt solution (6.2 ml corresponds to 0.24 mM of cobalt). The pressure bottle was vigorously shaken and then placed in a rotary polymerization tank at 20°C in which polymerization was effected for 1 hr. The polymer formed was treated in the same manner as in Example 10. The polymer obtained had a yield of 65%, a 1,2 content of 96% and Tm by DSC of 181°C.

Example 24

Preparation of catalyst

In a 100-ml pressure bottle preliminarily purged with nitrogen were placed a Teflon-coated stirrer, and 10 ml of a 0.20 mole/liter solution of cobalt octylate in toluene was charged into the bottle. The pressure bottle was stoppered. To the pressure bottle was fed 4 ml of butadiene, and the pressure bottle was then placed in an iced water bath at 0°C. While rotating the stirrer vigorously, 16 ml of 0.5 mole/liter solution of dihexylmagnesium in n-hexane was fed to the pressure bottle. The resulting mixture was subjected to reaction for about 5 min. The reaction mixture obtained (reacted cobalt solution) was used in the subsequent polymerization.

Polymerization

In a 350-ml pressure bottle was placed 200 ml of distilled water, and nitrogen bubbling was conducted for 5 min. To the distilled water were added 0.15 g of a sodium salt of a maleic anhydride-diisobutylene copolymer and 0.07 g of calcium chloride. Thereto was further added 17.7 g of butadiene, and the pressure bottle was then stoppered. To the pressure bottle were fed 0.20 mM of carbon disulfide and 3.0 ml of the above reacted cobalt solution (3.0 ml corresponds to 0.20 mM of cobalt). The pressure bottle was vigorously shaken and then placed in a rotary polymerization tank at 20°C, in which polymerization was effected for 1 hr. The polymer formed was treated in the same manner as in Example 10. The polymer obtained had a yield of 84%, a 1,2 content of 98% and a Tm by DSC of 192°C.

Example 25

Preparation of catalyst

In a 100-ml pressure bottle preliminarily purged with nitrogen was placed a Teflon-coated stirrer, and 20 ml of a 0.05 mole/liter solution of cobalt naphthenate in toluene was charged into the bottle. The pressure bottle was stoppered. 2 ml of butadiene was fed to the pressure bottle. The pressure bottle was

then placed in an iced water bath at 0°C. While rotating the stirrer vigorously, to the pressure bottle was fed 8 ml of a 0.5 mole/liter solution of dibutylaluminum hydride in hexane. The resulting mixture was subjected to reaction for about 5 min. The reaction mixture obtained (reacted cobalt solution) was used in the subsequent polymerization.

Polymerization

In a 350-ml pressure bottle was placed 200 ml of distilled water, and nitrogen bubbling was conducted for 5 min. To the distilled water were added 0.15 g of a sodium salt of a maleic anhydride-diisobutylene copolymer and 0.07 g of calcium chloride. To the resulting mixture was added 17.7 g of butadiene. The pressure bottle was stoppered. To the pressure bottle were fed 0.20 mM of carbon disulfide and 6.0 ml of the above reacted cobalt solution (6.0 ml corresponds to 0.20 mM of cobalt). The pressure bottle was vigorously shaken and then placed in a rotary polymerization tank at 20°C, in which polymerization was effected for 1 hr. The polymer formed was treated in the same manner as in Example 10. The polymer obtained had a yield of 92%, a 1,2 content of 98% and a Tm by DSC of 190°C.

Example 26

Preparation of catalyst

In a 100-ml pressure bottle preliminarily purged with nitrogen were placed a Teflon-coated stirrer, and 20 ml of a 0.05 mole/liter solution of cobalt naphthenate in toluene was charged into the bottle. The pressure bottle was stoppered, and 4 ml of butadiene was fed to the pressure bottle. The pressure bottle was placed in an iced water bath at 0°C. While rotating the stirrer vigorously, to the pressure bottle was fed 50 ml of a 0.1 mole/liter solution of tetraethylaluminoxane in methylene chloride prepared according to the procedure mentioned hereinafter. The resulting mixture was subjected to reaction for about 5 min. The reaction mixture obtained (reacted cobalt solution) was used in the subsequent polymerization.

[Preparation of tetraethylaluminoxane]

In a 100-ml pressure bottle preliminarily purged with nitrogen was placed a Teflon-coated stirrer, and 45 ml of methylene chloride and 45 mg of water were charged into the bottle. The pressure bottle was stoppered. While rotating the stirrer vigorously at −10°C, 5 ml of a 1.0 mole/liter solution of triethylaluminum in toluene was charged into the bottle. Then, reaction was carried out to synthesize the tetraethylaluminoxane.

Polymerization

In a 350-ml pressure bottle was placed 200 ml of distilled water, and nitrogen bubbling was conducted for 5 min. To the distilled water were added 0.15 g of a sodium salt of a maleic anhydride-diisobutylene copolymer and 0.07 g of calcium chloride, and 17.7 g of butadiene was further added. The pressure bottle was then stoppered. To the pressure bottle were fed 0.20 mM of carbon sulfide and 14.8 ml of the above reacted cobalt solution (14.8 ml corresponds to 0.20 mM of cobalt). The pressure bottle was vigorously shaken and then placed in a rotary polymerization tank at 20°C, in which polymerization was effected for 1 hr. The polymer formed was treated in the same manner as in Example 10. The polymer obtained had a yield of 78%, a 1,2 content of 98% and a Tm by DSC of 188°C.

Example 27

Preparation of catalyst

In a 100-ml pressure bottle preliminarily purged with nitrogen was placed a PTFE-coated stirrer, and 9.0 ml of a 0.20 mole/liter solution of cobalt octylate in cyclohexane. The pressure bottle was stoppered, after which 6 ml of butadiene was fed to the pressure bottle. The pressure bottle was placed in an iced water bath at 0°C. While rotating the stirrer vigorously, 9.0 ml of a 0.4 mole/liter solution of n-butyllithium in hexane was fed to the pressure bottle. The resulting mixture was subjected to reaction for about 15 min. The reaction mixture obtained (reacted cobalt solution) was used in the subsequent polymerization.

Polymerization

In an 800-ml glass autoclave was placed 10 g of a cis - 1,4 - polybutadiene rubber (JSR BR 01, manufactured by Japan Synthetic Rubber Co., Ltd.), and nitrogen purging was conducted. Into the autoclave was further charged 160 ml of toluene preliminarily freed of oxygen by nitrogen bubbling to completely dissolve the cis - 1,4 - polybutadiene rubber. To the resulting solution was added 200 ml of water preliminarily freed of oxygen, and 40 g of butadiene and 8.0 ml of the reacted cobalt solution (8.0 ml corresponds to 0.6 mM of cobalt) were then added thereto. The resulting mixture was thoroughly stirred. To this mixture were added 5 ml of a 2% aqueous solution of sodium dodecylsulfate and 0.6 mM of carbon disulfide. Polymerization was conducted at 20°C for 1 hr. A mixture of the added rubber and a crystalline 1,2-polybutadiene formed was obtained as a crumb slurry dispersion of low viscosity. After the polymerization, the crumb-like polymer was collected on a cloth. The polymer was allowed to coagulate in methanol containing 1% of BHT as an antioxidant and then vacuum-dried at 50°C, whereby 20.4 g of a polymer composition of the added rubber and a crystalline 1,2-polybutadiene (20.4 g corresponds to a

butadiene polymerization conversion of 27%). The polymer composition showed a glass transition temperature Tg of −121.0°C and melting points of −11.5°C ($Tm_1$, based on cis - 1,4 - polybutadiene rubber) and 188.5°C ($Tm_2$, based on crystalline 1,2 - polybutadiene) as a result of DSC analysis. The polymer composition was uniform.

Comparative Example 3

In an 800-ml autoclave was placed 20 g of a cis - 1,4 - polybutadiene rubber, and nitrogen purging was conducted. Into the autoclave was charged 320 ml of a toluene freed of oxygen. Thereto were added 80 g of butadiene and 16.0 ml of the reacted cobalt solution obtained in Example 27 (16.0 ml corresponds to 1.2 mM of cobalt). The resulting mixture was thoroughly stirred. Thereafter, 1.2 mM of carbon disulfide was added. Polymerization was conducted at 20°C for 1 hr. Inside the autoclave, the viscosity of the contents became very high with the progress of polymerization, and sufficient stirring became impossible about 10 min after the start of polymerization. However, polymerization was continued. After the polymerization, the autoclave had to be disassembled to take out a polymer formed. It implied that commercial production of a polymer according to the above procedure is very difficult. The polymer taken out was subjected to coagulation in methanol containing 1% of BHT and vacuum-dried at 50°C, thereby obtaining 37.4 g of a composition polymer (37.4 g corresponds to a butadiene-polymerization conversion of 21.8%). The polymer showed a Tg of −120°C and $Tm_1$ of −11.0°C and $Tm_2$ of 188°C.

Examples 28 to 45

The same procedure as in Example 27 was repeated, except that the amount of the rubber added, the amount of butadiene added, the amount of the reacted cobalt solution added and the amount of carbon disulfide used were changed and in Examples 29 to 45, the cis - 1,4 - polybutadiene was replaced by other polymers, thereby obtaining composite polymers as in Example 27. The results are shown in Table 5.

Example 46

The same procedure as in Example 28 was repeated, except that the polymerization scale was raised to a 10-liter autoclave, whereby 283 g of a composite polymer was obtained.

This composite polymer (100 parts) was mixed with carbon black, zinc oxide, stearic acid, etc. in accordance with the following compounding recipe, by a Banbury mixer, the resulting mixture was compounded with a vulcanizing agent and accelerators with the following compounding recipe on a roll, and vulcanization was conducted at 145°C for 40 min:

| Compounding recipe | |
|---|---|
| Polybutadiene composite | 100 parts |
| Carbon black (HAF type) | 50 parts |
| Aromatic oil | 10 parts |
| Zinc oxide | 4 parts |
| Stearic acid | 2 parts |
| Accelerator, MSA *1 | 0.5 part |
| Accelerator, DM *2 | 1.0 part |
| Sulfur | 2.0 parts |

Note:
*1 N-oxydiethylene-2-benzothiazole sulfenamide
*2 Di-2-benzothiazyl sulfide

The results are shown in Table 6.

Comparative Example 4
Preparation of polymer

An 800-ml autoclave was purged with nitrogen. In the autoclave were placed 300 ml of toluene preliminarily subjected to nitrogen bubbling treatment and 30 g of butadiene, and further placed 5.0 ml of a 0.5 mole/liter solution of triisobutylaluminum in toluene, 2.5 ml of a 0.2 mole/liter solution of cobalt octylate in toluene and 2.5 ml of a 0.2 mole/liter solution of carbon disulfide in toluene. Then, polymerization was conducted at 20°C for 2 hr. In the course of the polymerization, a polymer started to deposit, and sufficient stirring became impossible.

After the completion of the polymerization, the polymer formed was subjected to coagulation in methanol containing 1% of BHT and then vacuum-dried. The polymer obtained had a yield of 23.2 g, a Tm of 197°C and 1,2 content of 98%.

Preparation of composite polymer

200 g of a cis - 1,4 - polybutadiene rubber was wound around a 15.24 cm (6 in) roll. Thereto was slowly added 20 g of the above 1,2 - polybutadiene and they were kneaded sufficiently. The thus obtained composite polymer was used as a sample for evaluation.

Upon visual checking, particles of the 1,2 - polybutadiene were found in dots in the composite polymer. This implied that the composite polymer was not uniform.

[Evaluation of physical properties]

The above composite polymer was mixed with carbon black and other additives according to the same compounding recipe as in Example 46 and evaluated. The results are shown in Table 6.

Comparative Example 5

A cis - 1,4 - polybutadiene was mixed with carbon black and other additives according to the same compounding recipe as in Example 46 and evaluated. The results are shown in Table 6.

Example 47

Preparation of catalyst

In a 100-ml pressure bottle preliminarily purged with nitrogen was placed a Teflon-coated stirrer, and 9 ml of 0.20 mole/liter solution of cobalt octylate in cyclohexane was charged into the bottle. The pressure bottle was stoppered. To the pressure bottle was fed 4 ml of butadiene. The pressure bottle was placed in an iced water bath at 0°C. While rotating the stirrer vigorously, 54 ml of a 0.1 mole/liter solution of sodium boron hydride in isopropanol was charged into the bottle. The resulting mixture was subjected to reaction for about 15 min. The reaction mixture obtained was used in the subsequent polymerization as a reacted cobalt solution.

Preparation of polymer

In an 800-ml glass autoclave was placed 10 g of a cis - 1,4 - polyisoprene rubber (JSR BR 01, manufactured by Japan Synthetic Rubber, Co., Ltd.), and nitrogen purging was conducted. To the rubber was added 160 ml of toluene freed of oxygen by nitrogen bubbling treatment to completely dissolve the rubber therein. Then, 200 ml of water freed of oxygen was added. Further, 40 g of butadiene and 22.3 ml of the above reacted cobalt solution. (22.3 ml corresponds to 0.6 mM of cobalt) were added thereto. The resulting mixture was thoroughly stirred. To this mixture were added 5 ml of a 2% aqueous solution of sodium dodecylsulfate and 0.6 mM of carbon disulfide. Polymerization was conducted at 20°C for 1 hr. The rubber added and a crystalline 1,2-polybutadiene formed was obtained in the form of a crumb slurry dispersion of low viscosity. After the completion of the polymerization, a crumb-like polymer was recovered by use of a Tetoron cloth, subjected to coagulation in methanol containing 1% of BHT and vacuum-dried at 50°C.

Thus, 32.0 g of a polymer composition of the rubber and a 1,2-polybutadiene (32.0 g corresponds to a butadiene-polymerization conversion of 55%). By DSC analysis, it was found that the composition had a Tg of −72°C and a Tm of 175.0°C. Visual checking revealed that the cis - 1,4 - polyisoprene rubber and the crystalline 1,2 - polybutadiene were uniformly mixed with each other in the composition.

Example 48

Preparation of catalyst

In a 100-ml pressure bottle preliminarily purged with nitrogen was placed a Teflon-coated stirrer, and 10 ml of a 0.25 mole/liter solution of cobalt octylate in toluene was charged into the bottle. The pressure bottle was stoppered. To the pressure bottle was fed 6 ml of butadiene. The pressure bottle was placed in an iced water bath at 0°C. While rotating the stirrer vigorously, the pressure bottle 25 ml of a 0.50 mole/liter solution of triisobutylaluminum in toluene was charged into the bottle. The resulting mixture was subjected to reaction for about 15 min. The reaction mixture obtained was used in the subsequent polymerization as a reacted cobalt solution.

Polymerization

The same polymerization and post-treatment as in Example 46 were carried out in the presence of a cis - 1,4 - polyisoprene rubber using 9.8 ml of the above reacted cobalt solution (9.8 ml corresponds to 0.6 mM of cobalt).

Thus, 26.8 g of a polymer composition of the rubber added and a crystalline 1,2 - polybutadiene (26.8 g corresponds to a butadiene-polymerization conversion of 42%) was obtained.

By DSC analysis, it was found that the composition had a Tg of −72°C and a Tm of 188°C. Visual checking revealed that the cis - 1,4 - polyisoprene rubber and the crystalline 1,2-polybutadiene were uniformly mixed with each other in the composition.

TABLE 5

| Example No. | Polymerization conditions | | | | | | |
|---|---|---|---|---|---|---|---|
| | Rubber or resin | | Amount of solvent (toluene) (ml) | Amount of water (ml) | Amount of butadiene (g) | Amount of reacted cobalt (mM) | Amount of carbon disulfide (mM) |
| | Kind | Amount (g) | | | | | |
| 27 | Cis-1,4-poly-*1 butadiene | 10 | 160 | 200 | 40 | 0.6 | 0.6 |
| 28 | " | 20 | " | " | 4 | 0.2 | 0.2 |
| 29 | SBR of solution*2 polymerization | 10 | " | " | 40 | 0.6 | 0.6 |
| 30 | " | 20 | 160 | 200 | 4 | 0.2 | 0.2 |
| 31 | Cis-1,4-poly-*3 isoprene | 10 | " | " | 40 | 0.6 | 0.6 |
| 32 | " | 10 | " | " | 10 | 0.2 | 0.2 |
| 33 | " | 20 | " | " | 4 | 0.2 | 0.2 |
| 34 | Ethylene-propylene copolymer rubber*4 | 10 | " | " | 40 | 0.6 | 0.6 |
| 35 | Ethylene-propylene copolymer rubber*4 | 10 | " | " | 10 | 0.2 | 0.2 |
| 36 | " | 20 | " | " | 4 | 0.2 | 0.2 |
| 37 | Acrylonitrile-*5 butadiene copoly-mer rubber | 10 | 160 | 200 | 40 | 0.6 | 0.6 |
| 38 | " | 20 | " | " | 4 | 0.2 | 0.2 |
| 39 | Acrylic rubber*6 | 10 | 160 | 200 | 40 | 0.6 | 0.6 |
| 40 | " | 10 | " | " | 10 | 0.2 | 0.2 |
| 41 | " | 20 | " | " | 4 | 0.2 | 0.2 |
| 42 | Polystyrene resin*7 | 10 | " | " | 40 | 0.6 | 0.6 |
| 43 | " | 20 | " | " | 4 | 0.2 | 0.2 |
| 44 | Ethylene-vinyl-*8 acetate resin | 10 | " | " | 40 | 0.6 | 0.6 |
| 45 | Ethylene-vinyl*8 acetate resin | 20 | " | " | 4 | 0.2 | 0.2 |
| 47 | Ci-1,4-poly-*3 isoprene | 10 | " | " | 40 | 0.6 | 0.6 |

TABLE 5 (cont.).

| Yield | | Properties of composite polymer | | | |
|---|---|---|---|---|---|
| Yield of composite polymer (g) | Butadiene-polymerization conversion (%) | Tg (°C) | $Tm_1$ (°C) | $Tm_2$ (°C) | Appearance of polymer |
| 20.8 | 27 | −121.0 | −11.5 | 188.5 | Crumb-like |
| 22.6 | 65 | −122 | −8.5 | 188.5 | Paste-like |
| 25.8 | 40 | −59.5 | — | 188.5 | Crumb-like |
| 22.4 | 62 | −59.5 | — | 187.5 | Paste-like |
| 30.1 | 50 | −72.0 | — | 187.5 | Crumb-like |
| 18.6 | 86 | −73.0 | — | 187.0 | Crumb-like |
| 23.6 | 91 | −74.0 | — | 185.5 | Paste-like |
| 28.9 | 47 | −65.0 | — | 188.0 | Crumb-like |
| 17.0 | 69 | −65.0 | — | 188.5 | Crumb-like |
| 22.8 | 71 | −65.0 | — | 188.5 | Paste-like |
| 17.8 | 20 | −36.5 | — | 165 | Crumb-like |
| 20.8 | 20 | −36.5 | — | 160 | Paste-like |
| 23.4 | 33 | −33.0 | — | 188.5 | Crumb-like |
| 13.6 | 35 | −38.0 | — | 182.0 | Crumb-like |
| 21.6 | 39 | −43.0 | — | 176.5 | Paste-like |
| 28.0 | 45 | 92.0 | — | 189.0 | Crumb-like |
| 23.0 | 74 | 93.0 | — | 188.5 | Paste-like |
| 23.6 | 34 | — | 174.0 | 183.5 | Crumb-like |
| 22.3 | 57 | — | 79.0 | 173.5 | Paste-like |
| 32.0 | 55 | −72 | — | 175 | Crumb-like |

Note:

| | |
|---|---|
| *1 Cis-1,4-polybutadiene rubber | JSR BR 01, manufactured by Japan Synthetic Rubber Co., Ltd. |
| *2 SBR of solution polymerization | JSR SL 552, manufactured by Japan Synthetic Rubber Co., Ltd. |
| *3 Cis-1,4-polyisoprene rubber (Synthetic rubber of natural rubber type) | JSR IR 2200, manufactured by Japan Synthetic Rubber Co., Ltd. |
| *4 Ethylene-propylene copolymer rubber | JSR EP 24, manufactured by Japan Synthetic Rubber Co., Ltd. |
| *5 Acrylonitrile-butadiene copolymer rubber | JSR N 230S, manufactured by Japan Synthetic Rubber Co., Ltd. |
| *6 Acrylic rubber | JSR AR 201, manufactured by Japan Synthetic Rubber Co., Ltd. |
| *7 Polystyrene resin | Torpolex 525, manufactured by Mitsui Toatsu Chemicals, Inc. |
| *8 Ethylene-vinyl acetate resin | Ultrathene 633, manufactured by Toyo Soda MFG Co., Ltd. |

Comparative Example 6

In an 800-ml autoclave preliminarily purged with nitrogen were placed 400 ml of distilled water preliminarily subjected to nitrogen bubbling and 100 g of butadiene.

Then, 5.9 ml of the reacted cobalt solution obtained in Example 48 (5.9 ml corresponds to 0.36 mM of cobalt), and was placed in the autoclave, and 0.36 mM of carbon disulfide was then placed therein to initiate polymerization. The polymerization was effected for 1 hr while maintaining the polymerization system at 15°C. After the completion of the polymerization, the polymer formed was collected on a cloth, immersed in methanol containing 1% of BHT and vacuum-dried overnight at 50°C. As a result, 32 g of a gypsum-like polymer having a Tm of 192°C was obtained.

20 g of the 1,2-polybutadiene obtained above was added to a solution of 200 g of a cis - 1,4 - polybutadiene in 2500 ml of toluene. The mixture was vigorously stirred. Then, the mixture was freed of toluene by steam stripping. The residue was dried on a roll at 120°C to obtain a dry composite polymer. Upon visual checking, particles of the 1,2 - polybutadiene were found in dots in the composite polymer. This implied that the polymer was a non-uniform composition.

This composition was vulcanized in accordance with the same compounding recipe as in Example 46. The results are shown in Table 6. For comparison, Table 6 also shows the data of Example 46 and Comparative Examples 4 and 5.

This composition had a low tensile strength due to the poor dispersion of the 1,2-polybutadiene in the composition.

TABLE 6

| | Example 46 | Comparative Example 4 (roll-blended) | Comparative Example 5 | Comparative Example 6 |
|---|---|---|---|---|
| 300% modulus (kg/cm$^2$) | 126 | 112 | 88 | 107 |
| Stress at break (kg/cm$^2$) | 255 | 210 | 250 | 174 |
| Elongation at break (%) | 590 | 500 | 630 | 430 |
| Hardness (JIS-A) | 65 | 67 | 62 | 63 |
| Flex test (times) | 100,000 | 15,000 | 50,000 | 10,000 |
| Extrusion test (full mark: 16) | 16 | 12 | 15 | 8 |
| Dies well | 1.10 | 1.29 | 1.55 | 1.36 |

Extrusion test
ASTM D2230
Garvey die
Screw diameter: 10 mm
L/D=8
Die temperature: 100°C
Revolution rate: 20 rpm

As is obvious from Examples 27 to 48 and Table 6, according to this invention, a polymer composition in which a polymer such as a rubber or resin and a crystalline 1,2-polybutadiene are extremely uniformly dispersed can easily be obtained from a reaction system having a low viscosity by subjecting butadiene to 1,2-polymerization in the presence of water and in the presence of a solution of the polymer.

Example 49

The same procedure as in Example 28 was repeated, except that sodium dodecylsulfate was not used. The results are shown in Table 7.

TABLE 7

| Yield | | Properties of composite polymer | | | Appearance of composite polymer |
|---|---|---|---|---|---|
| Polymer (g) | Polybutadiene (%) | Tg (°C) | $Tm_1$ (°C) | $Tm_2$ (°C) | |
| 22.7 | 68 | −122 | −8.0 | 189 | Pasty |

Example 50

Polymerization was conducted by repeating the procedure of Example 1, except that, in polymerization, 0.5 g of 2,6 - di - tert - butyl - p - cresol (BHT) was fed to the autoclave prior to addition of butadiene. As a result, 16.2 g of a bead polymer having an average particle diameter of 0.7 mm was obtained.

The polymer had a Tm of 193°C and a vinyl configuration content of 98%. The BHT was uniformly dispersed in the polymer.

Example 51

Polymerization was conducted by repeating the same procedure as in Example 2, except that additives were added as shown in Table 7 when effecting the butadiene polymerization. The results are shown in Table 8.

TABLE 8

| Run No. | Additive | Addition amount (g) | Butadiene-polymerization conversion (%) |
|---|---|---|---|
| 1 | None (same as in Example 2) | 0 | 89 |
| 2 | 2,6-Di-tert-butyl-p-cresol | 0.5 | 89 |
| 3 | 2,2′-Dihydroxy-3,3′-di(α-methylcyclohexyl)-5,5′-dimethyldiphenylmethane | 0.5 | 95 |
| 4 | Dilauryl 3,3′-thiodipropionate | 0.5 | 88 |
| 5 | 3,5-Di-tert-butyl-4-hydroxybenzyl alcohol | 0.5 | 93 |
| 6 | Azodicarbonamide | 2.5 | 95 |
| 7 | p,p′-Oxybisbenzenesulfonyl hydrazine | 2.5 | 84 |
| 8 | Zinc oleate | 2.5 | 92 |
| 9 | Azobisisobutyronitrile | 2.5 | 82 |

**Claims**

1. A process for preparing a diene polymer by polymerising a conjugated diene in an aqueous system and in the presence of a catalyst system prepared by:

(i) contacting (A) a cobalt compound with (B) an organometallic compound or hydride of a metal from Groups I to III of the Periodic Table of the Elements in the presence of from 1 to 100 moles, per mole of (A), of a conjugated diene; and

(ii) adding to (i) (C) at least one compound selected from carbon disulfide, phenylisothiocyanic acid and xanthogen compounds, in the presence of at least one compound selected from surfactants, dispersants and polymer solutions.

2. A process according to Claim 1, wherein the polymerization of the conjugated diene is conducted in the presence of a surfactant and a dispersant.

3. A process according to Claim 1 or Claim 2, wherein the dispersant is at least one protective colloid substance and/or metal chloride and/or phosphate.

4. A process according to Claim 1 or Claim 2, wherein the dispersant is a protective colloid substance.

5. A process according to any one of the preceding claims, wherein the surfactant is at least one anionic and/or cationic and/or nonionic surfactant.

6. A process according to any one of Claims 2 to 5, wherein the amount of said surfactant and said dispersant is from 30 to 0.0001 g per 100 g of the conjugated diene monomer.

7. A process according to Claim 6, wherein the amount of said surfactant and said dispersant is from 10 to 0.001 g per 100 g of the conjugated diene monomer.

8. A process according to any one of the preceding claims, wherein the polymerisation of the conjugated diene is conducted in the presence of a polymer solution.

9. A process according to Claim 8, wherein the polymer in the polymer solution is at least one of natural rubber, synthetic rubbers and synthetic resins.

10. A process according to Claim 8 or Claim 9, wherein the solvent in the polymer solution is at least one aliphatic hydrocarbon, aromatic hydrocarbon, halogenated hydrocarbon, ester, alcohol, ketone, nitrile or amide.

11. A process according to any one of Claims 8 to 10, wherein the concentration of the polymer in the polymer solution is from 0.1 to 50% by weight.

12. A process according to Claim 11, wherein the concentration of the polymer in the polymer solution is from 1 to 20% by weight.

13. A process according to any one of the preceding claims, wherein the cobalt compound (A) is at least one organic acid salt of cobalt, acetonate complex of cobalt, triarylphosphine complex of a cobalt halide, pyridine derivative complex of a cobalt halide or alcohol complex of a cobalt halide.

14. A process according to any one of the preceding claims, wherein the metal of the catalyst component (B) is at least one of Li, Na, K, Mg, Zn and Al.

15. A process according to Claim 14, wherein the metal of the cobalt compound (B) is at least one of Li and Al.

16. A process according to any one of the preceding claims, wherein the catalyst component (B) is a hydride of a metal of Groups I to III of the Periodic Table.

17. A process according to Claim 16, wherein the metal hydride as the catalyst component (B) is at least one of lithium aluminum hydride, sodium boron hydride and lithium boron hydride.

18. A process according to any one of the preceding claims, wherein the molar ratio of the conjugated diene to the cobalt compound (A) is from 6 to 50.

19. A process according to any one of the preceding claims, wherein the molar ratio of the catalyst component (B) to the catalyst component (A) is from 0.3 to 100.

20. A process according to any one of the preceding claims, wherein the molar ratio of the catalyst component (B) to the catalyst component (A) is from 0.9 to 50.

21. A process according to any one of the preceding claims, wherein the catalyst component (A) is contacted with the catalyst component (B) at a temperature of from −30° to 50°C.

22. A process according to any one of the preceding claims, wherein the contact between the catalyst component (A) and the catalyst component (B) is conducted in at least one solvent selected from aliphatic hydrocarbons, aromatic hydrocarbons and conjugated dienes.

23. A process according to any one of the preceding claims, wherein the component (C) is carbon disulfide.

24. A process according to any one of the preceding claims, wherein the component (C) is first added to at least one member selected from a conjugated diene, a solution of a monomer in a solvent and a water medium.

25. A process according to any one of the preceding claims, wherein the component (C) is added to the polymerization system after the components (A) and (B) have been added to the system.

26. A process according to any one of the preceding claims, wherein the component (C) is added in a proportion of from 0.01 to 100 moles per mole of the cobalt compound (A).

27. A process according to Claim 26, wherein the component (C) is added in a proportion of from 0.3 to 10 moles per mole of the cobalt compound (A).

28. A process according to any one of the preceding claims, wherein the conjugated diene monomer is at least one of butadiene and isoprene.

29. A process according to any one of the preceding claims, wherein the polymerisation system is prepared by mixing a solution of a polymer in an organic solvent, water and a conjugated diene with a catalyst obtained by first contacting the component (A) with the component (B) in the presence of a conjugated diene, and then adding the component (C) thereto.

30. A process according to any one of the preceding claims, wherein at least one surfactant and/or dispersant is first added to water.

31. A process according to any one of Claims 1 to 29, wherein at least one surfactant and/or dispersant is added to the polymerizaton system after the components (A) and (B) have been added to the polymerisation system.

32. A process according to any one of the preceding claims, wherein the polymerisation system is prepared by mixing the component (C) with a solution of a polymer in an organic solvent, water and a

conjugated diene monomer and then adding thereto a catalyst obtained by first contacting component (A) with component (B) in the presence of a conjugated diene.

33. A process according to any one of the preceding claims, wherein at least one member selected from the group consisting of an antioxidant, an ultraviolet absorber, a foaming agent, a flame retardant, a lubricant, a processing adjuvant, a filler, a dye, a pigment and a polymerisation initiator is added to the polymerisation system.

**Patentansprüche**

1. Verfahren zur Herstellung von Dien-Polymerisate durch Polymerisation eines konjugierten Diens in einem wäßrigen System und in Gegenwart eines Katalysatorsystems, das hergestellt ist durch

(i) Inkontaktbringen einer Cobaltverbindung (A) mit einer Organometallverbindung oder einem Hydrid eines Metalls der Gruppen I bis III des Periodensystems in Gegenwart von 1 bis 100 mol eines konjugierten Diens/mol (A) und

(ii) Zusatz mindestens einer unter Schwefelkohlenstoff, Phenylisothiocyansäure und Xanthogenatverbindungen ausgewählten Verbindung (C) zu dem Gemisch aus (i) in Gegenwart mindestens eines unter grenzflächenaktiven Mitteln, Dispergiermitteln und Polymerlösungen ausgewählten Stoffs.

2. Verfahren nach Anspruch 1, dadurch gekennzeichnet, daß die Polymerisation des konjugierten Diens in Gegenwart eines grenzflächenaktiven Mittels und eines Dispergiermittels durchgeführt wird.

3. Verfahren nach Anspruch 1 oder 2, dadurch gekennzeichnet, daß das Dispergiermittel mindestens eine als Schutzkolloid wirkende Substanz und/oder ein Metallchlorid und/oder ein Phosphat ist.

4. Verfahren nach Anspruch 1 oder 2, dadurch gekennzeichnet, daß das Dispergiermittel eine als Schutzkolloid wirkende Substanz ist.

5. Verfahren nach einem der Ansprüche 1 bis 4, dadurch gekennzeichnet, daß das grenzflächenaktive Mittel mindestens ein anionisches und/oder kationisches und/oder nichtionisches grenzflächenaktives Mittel ist.

6. Verfahren nach einem der Ansprüche 2 bis 5, dadurch gekennzeichnet, daß die Menge des grenzflächenaktiven Mittels und des Dispergiermittels 30 bis 0,0001 g/100 g des konjugierten Dienmonomers beträgt.

7. Verfahren nach Anspruch 6, dadurch gekennzeichnet, daß die Menge des grenzflächenaktiven Mittels und des Dispergiermittels 10 bis 0,001 g/100 g des konjugierten Dienmonomers beträgt.

8. Verfahren nach einem der Ansprüche 1 bis 7, dadurch gekennzeichnet, daß die Polymerisation des konjugierten Diens in Gegenwart eines Polymerlösung durchgeführt wird.

9. Verfahren nach Anspruch 8, dadurch gekennzeichnet, daß das Polymer in der Polymerlösung mindestens ein unter Naturkautschuk, synthetischen Kautschuken und Kunstharzen ausgewähltes Polymer ist.

10. Verfahren nach Anspruch 8 oder 9, dadurch gekennzeichnet, daß, das Lösungsmittel in der Polymerlösung mindestens ein unter aliphatischen Kohlenwasserstoffen, aromatischen Kohlenwasserstoffen, halogenierten Kohlenwasserstoffen, Ersten, Alkoholen, Ketonen, Nitrilen und Amiden ausgewähltes Lösungsmittel ist.

11. Verfahren nach einem der Ansprüche 8 bis 10, dadurch gekennzeichnet, daß die Konzentration des Polymers in der Polymerlösung 0,1 bis 50 Masse-% beträgt.

12. Verfahren nach Anspruch 11, dadurch gekennzeichnet, daß die Konzentration des Polymers in der Polymerlösung 1 bis 20 Masse-% beträgt.

13. Verfahren nach einem der Ansprüche 1 bis 12, dadurch gekennzeichnet, daß die Cobaltverbindung (A) mindestens eine unter Cobaltsalzen organischer Säuren, Cobaltacetonat-Komplexen, Cobalthalogenid-Triarylphosphin-Komplexen, Komplexen von Cobalthalogeniden mit Pyridinderivaten und Alkoholkomplexen von Cobalthalogeniden ausgewählte Verbindung ist.

14. Verfahren nach einem der Ansprüche 1 bis 13, dadurch gekennzeichnet, daß das Metall der Katalysatorkomponente (B) mindestens ein unter Li, Na, K, Mg, Zn und Al ausgewähltes Metall ist.

15. Verfahren nach Anspruch 14, dadurch gekennzeichnet, daß das Metall der Katalysatorkomponente (B) Li und/oder Al ist.

16. Verfahren nach einem der Ansprüche 1 bis 15, dadurch gekennzeichnet, daß die Katalysatorkomponente (B) ein Hydrid eines Metalls der Gruppen I bis III des Periodensystems ist.

17. Verfahren nach Anspruch 16, dadurch gekennzeichnet, daß das als Katalysatorkomponente (B) verwendete Metallhydrid Lithiumaluminiumhydrid, Natriumborhydrid und/oder Lithiumborhydrid ist.

18. Verfahren nach einem der Ansprüche 1 bis 17, dadurch gekennzeichnet, daß das Molverhältnis von konjugiertem Dien zu Cobaltverbindung (A) 6 bis 50 beträgt.

19. Verfahren nach einem der Ansprüche 1 bis 18, dadurch gekennzeichnet, daß das Molverhältnis von Katalysatorkomponente (B) zu Katalysatorkomponente (A) 0,3 bis 100 beträgt.

20. Verfahren nach einem der Ansprüche 1 bis 19, dadurch gekennzeichnet, daß das Molverhältnis von Katalysatorkomponente (B) zu Katalysatorkomponente (A) 0,9 bis 50 beträgt.

21. Verfahren nach einem der Ansprüche 1 bis 20, dadurch gekennzeichnet, daß die

Katalysatorkomponente (A) bei einer Temperatur von −30 bis 50°C mit der Katalysatorkomponente (B) in Kontakt gebracht wird.

22. Verfahren nach einem der Ansprüche 1 bis 21, dadurch gekennzeichnet, daß die Katalysatorkomponente (A) und die Katalysatorkomponente (B) in mindestens einem unter aliphatischen Kohlenwasserstoffen, aromatischen Kohlenwasserstoffen und konjugierten Dienen ausgewählten Lösungsmittel miteinander in Kontakt gebracht werden.

23. Verfahren nach einem der Ansprüche 1 bis 22, dadurch gekennzeichnet, daß die Komponente (C) Schwefelkohlenstoff ist.

24. Verfahren nach einem der Ansprüche 1 bis 23, dadurch gekennzeichnet, daß die Komponente (C) zunächst zu einem konjugierten Dien, einer Lösung eines Monomers in einem Lösungsmittel und/oder einem Wassermedium zugegeben wird.

25. Verfahren nach einem der Ansprüche 1 bis 24, dadurch gekennzeichnet, daß die Komponente (C) dem Polymerisationssystem zugesetzt wird, nachdem die Komponenten (A) und (B) zugesetzt wurden.

26. Verfahren nach einem der Ansprüche 1 bis 25, dadurch gekennzeichnet, daß die Komponente (C) in einem Mengenanteil von 0,01 bis 100 mol/mol der Cobaltverbindung (A) zugegeben wird.

27. Verfahren nach Anspruch 26, dadurch gekennzeichnet, daß die Komponente (C) in einem Mengenverhältnis von 0,3 bis 10 mol/mol der Cobaltverbindung (A) zugesetzt wird.

28. Verfahren nach einem der Ansprüche 1 bis 27, dadurch gekennzeichnet, daß das konjugierte Dienmonomer Butadien und/oder Isopren ist.

29. Verfahren nach einem der Ansprüche 1 bis 28, dadurch gekennzeichnet, daß das Polymerisationssystem durch Mischen einer Lösung eines Polymers in einem organischen Lösungsmittel, von Wasser sowie eines konjugierten Diens mit einem Katalysator hergestellt wird, der dadurch erhalten ist, daß zunächst die Komponente (A) mit der Komponente (B) in Gegenwart eines konjugierten Diens in Kontakt gebracht und anschließend die Komponente (C) zugesetzt wird.

30. Verfahren nach einem der Ansprüche 1 bis 29, dadurch gekennzeichnet, daß mindestens ein grenzflächenaktives Mittel und/oder Dispergiermittel zunächst zu Wasser zugegeben wird.

31. Verfahren nach einem der Ansprüche 1 bis 29, dadurch gekennzeichnet, daß mindestens ein grenzflächenaktives Mittel und/oder Dispergiermittel zu dem Polymerisationssystem zugegeben wird, nachdem die Komponenten (A) und (B) dem Polymerisationssystem zugesetzt wurden.

32. Verfahren nach einem der Ansprüche 1 bis 31, dadurch gekennzeichnet, daß das Polymerisationssystem durch Mischen der Komponente (C) mit einer Lösung eines Polymers in einem organischen Lösungsmittel, Wasser und einem konjugierten Dienmonomer und anschließende Zugabe eines Katalysators hergestellt wird, der dadurch erhalten ist, daß zunächst die Komponente (A) mit der Komponente (B) in Gegenwart eines konjugierten Diens in Kontakt gebracht wird.

33. Verfahren nach einem der Ansprüche 1 bis 32, dadurch gekennzeichnet, daß dem Polymerisationssystem mindestens ein unter Antioxidationsmitteln, UV-Absorbern, Schaummitteln, flammhemmenden Mitteln, Schmiermitteln, Verarbeitungshilfsstoffen, Füllstoffen, Farbstoffen, Pigmenten und Polymerisationsinitiatoren ausgewählter Stoff zugesetzt wird.

**Revendications**

1. Procédé pour la production d'un polymère de diène par polymérisation d'un diène conjugé dans un système aqueux et en présence d'un système catalytique préparé par:

(i) mise en contact de (A) un composé du cobalt avec (B) un composé organométallique ou hydrure d'un métal des Groupes I à III du Tableau périodique des Eléments, en présence de 1 à 100 moles, par mole de (A), d'un diène conjugé; et

(ii) addition à (i) de (C) au moins un composé choisi parmi le disulfure de carbone, l'acide phénylisothiocyanique et les composés xanthogénés, en présence d'au moins une substance choisie parmi des agents tensio-actifs, des agents dispersants et des solutions de polymère.

2. Procédé selon la revendication 1, dans lequel la polymérisation du diène conjugué est conduite en présence d'un agent tensio-actif et d'un agent dispersant.

3. Procédé selon la revendication 1 ou la revendication 2, dans lequel l'agent dispersant est au moins un colloïde protecteur et/ou un chlorure de métal et/ou un phosphate de métal.

4. Procédé selon la revendication 1 ou la revendication 2, dans lequel l'agent dispersant est un colloïde protecteur.

5. Procédé selon l'une quelconque des revendications précédentes, dans lequel l'agent tensio-actif est au moins un agent tensio-actif anionique et/ou cationique et/ou non ionique.

6. Procédé selon l'une quelconque des revendications 2 à 5, dans lequel la quantité dudit agent tensio-actif et dudit agent dispersant est de 30 à 0,0001 g pour 100 g du diène conjugé monomère.

7. Procédé selon la revendication 6, dans lequel la quantité dudit agent tensio-actif et dudit agent dispersant est de 10 à 0,001 g pour 100 g du diène conjugé monomère.

8. Procédé selon l'une quelconque des revendications précédentes, dans lequel la polymérisation du diène conjugué est conduite en présence d'une solution de polymère.

9. Procédé selon la revendication 8, dans lequel le polymère de la solution de polymère est l'un au moins du caoutchouc naturel, des caoutchoucs synthétiques et des résines synthétiques.

10. Procédé selon la revendication 8 ou la revendication 9, dans lequel le solvant de la solution de polymère est au moins un hydrocarbure aliphatique, un hydrocarbure aromatique, un hydrocarbure halogéné, un ester, un alcool, une cétone, un nitrile ou un amide.

11. Procédé selon l'une quelconque des revendications 8 à 10, dans lequel la concentration du polymère dans la solution de polymère est de 0,1 à 50% en poids.

12. Procédé selon la revendication 11, dans lequel la concentration du polymère dans la solution de polymère est de 1 à 20% en poids.

13. Procédé selon l'une quelconque des revendications précédentes, dans lequel le composé du cobalt (A) est au moins un sel de cobalt d'acide organique, un complexe du type acétonate de cobalt, un complexe de triarylphosphine d'un halogénure de cobalt, un complexe de dérivé de pyridine d'un halogénure de cobalt ou un complexe alcoolique d'un halogénure de cobalt.

14. Procédé selon l'une quelconque des revendications précédentes, dans lequel le métal du composant catalytique (B) est l'un au moins de Li, Na, K, Mg, Zn et Al.

15. Procédé selon la revendicaton 14, dans lequel le métal du composant catalytique (B) est l'un au moins de Li et Al.

16. Procédé selon l'une quelconque des revendications précédentes, dans lequel le composant catalytique (B) est un hydrure d'un métal des Groupes I à III du Tableau Périodique.

17. Procédé selon la revendication 16, dans lequel l'hydrure de métal pris comme composant catalytique (B) est l'un au moins de l'hydrure de lithium et d'aluminium, de l'hydrure de sodium et bore et de l'hydrure de lithium et de bore.

18. Procédé selon l'une quelconque des revendications précédentes, dans lequel le rapport molaire du diène conjugé au composé du cobalt (A) est de 6 à 50.

19. Procédé selon l'une quelconque des revendications précédentes, dans lequel le rapport molaire du composant catalytique (B) au composant catalytique (A) est de 0,3 à 100.

20. Procédé selon l'une quelconque des revendications précédentes, dans lequel le rapport molaire du composant catalytique (B) au composant catalytique (A) est de 0,9 à 50.

21. Procédé selon l'une quelconque des revendications précédentes, dans lequel le composant catalytique (A) est mis en contact avec le composant catalytique (B) à une température de −30 à 50°C.

22. Procédé selon l'une quelconque des revendications précédentes, dans lequel la mise en contact du composant catalytique (A) avec le composant catalytique (B) est effectuée dans au moins un solvant choisi parmi les hydrocarbures aliphatiques, les hydrocarbures aromatiques eet les diènes conjugués.

23. Procédé selon l'une quelconque des revendications précédentes, dans lequel le composant (C) est le bisulfure de carbone.

24. Procédé selon l'une quelconque des revendications précédentes, dans lequel on ajoute d'abord le composant (C) à au moins une substance choisie parmi un diène conjugé, une solution d'un monomère dans un solvant et un milieu aqueux.

25. Procédé selon l'une quelconque des revendications précédentes, dans lequel on ajoute le composant (C) au système de polymérisation après avoir ajouté les composants (A) et (B) au système.

26. Procédé selon l'une quelconque des revendications précédentes, dans lequel on ajoute le composant (C) en une proportion de 0,01 à 100 moles par mole du composé du cobalt (A).

27. Procédé selon la revendication 26, dans lequel on ajoute le composant (C) en une proportion de 0,3 à 10 moles par mole du composé du cobalt (A).

28. Procédé selon l'une quelconque des revendications précédentes, dans lequel le diène conjugé monomère est l'un au moins du butadiène et de l'isoprène.

29. Procédé selon l'une quelconque des revendications précédentes, dans lequel on prépare le système de polymérisation en mélangeant une solution d'un polymère dans un solvant organique, de l'eau et un diène conjugué avec un catalyseur obtenu en mettant d'abord en contact le composant (A) avec le composant (B) en présence d'un diène conjugué et en y ajoutant ensuite le composant (C).

30. Procédé selon l'une quelconque des revendications précédentes, dans lequel on ajoute d'abord à l'eau au moins un agent tensio-actif et/ou agent dispersant.

31. Procédé selon l'une quelconque des revendications 1 à 29, dans lequel on ajoute au moins un agent tensio-actif et/ou agent dispersant au système de polymérisation après avoir ajouté les composants (A) et (B) au système de polymérisation.

32. Procédé selon l'une quelconque des revendications précédentes, dans lequel on prépare le système de polymérisation en mélangeant le composant (C) avec une solution d'un polymère dans un solvant organique, de l'eau et un diène conjugué monomère, et en y ajoutant ensuite un catalyseur obtenu en mettant d'abord en contact le composant (A) avec le composant (B) en présence d'un diène conjugué.

33. Procédé selon l'une quelconque des revendications précédentes, dans lequel on ajoute au système de polymérisation au moins une substance choisi dans le groupe formé par un antioxydant, un absorbant d'ultraviolet, un agent moussant, un retardateur de flamme, un lubrifiant, un adjuvant de mise en oeuvre, une charge, un colorant, un pigment et un initiateur de polymérisation.